# EUROPEAN PATENT APPLICATION

(11) **EP 4 527 583 A1**
(43) Date of publication of application: **26.03.2025**
(21) Application number: 23826759.5
(22) Date of filing: 30.03.2023
(51) Int. Cl.: B29B 9/06, C08J 11/12, B29C 48/39

(54) **RESIN PROCESSING DEVICE, RESIN PELLET PRODUCTION METHOD, AND RESIN MATERIAL PROCESSING METHOD**

(30) Priority: 23.06.2022 JP 2022100813
(71) Applicant: The Japan Steel Works, Ltd., Tokyo 141-0032 (JP)
(72) Inventor: MORI, Masayuki, Tokyo 141-0032 (JP)
(74) Representative: Simmons & Simmons LLP (Munich)
(86) International application number: PCT/JP2023/013365
(87) International publication number: WO 2023/248570

(57) **Abstract**

A resin processing device 1 comprises: an extruder 11 to which a resin material 51 is fed; and an extruder 21 which is connected to the extruder 11 and to which residual resin discharged from the extruder 11 is fed. The temperature of a cylinder 12 for the extruder 1 is set such that the temperature on the downstream side relative to a kneading section 61 is higher than the pyrolytic temperature of the resin material 51. The temperature of a cylinder 22 for the extruder 12 is set such that the temperature on the downstream side relative to a position where the residual resin is fed is higher than the pyrolytic temperature of the residual resin.

## Description

### TECHNICAL FIELD

The present invention relates to a resin processing apparatus, a method of manufacturing resin pellets, and a method of processing a resin material.

### BACKGROUND ART

Japanese Unexamined Patent Application Publication No. H11-106758 (Patent Document 1) and Japanese Unexamined Patent Application Publication No. H11-50072 (Patent Document 2) disclose a technique related to the processing of a waste plastic.

### RELATED ART DOCUMENTS

### PATENT DOCUMENTS

Patent Document 1: Japanese Unexamined Patent Application Publication No. H11-106758
Patent Document 2: Japanese Unexamined Patent Application Publication No. H11-50072

### SUMMARY OF THE INVENTION

### PROBLEMS TO BE SOLVED BY THE INVENTION

Processing resin materials such as waste plastics for recycling has been promoted in recent years, and it is thus desirable to process the resin materials efficiently.

One possible method for processing resin materials such as waste plastics is to thermally decompose the resin materials to generate monomer and then recover the generated monomer. An extruder can be used for the thermal decomposition of the resin materials. For example, a resin material to be processed is supplied into a cylinder of an extruder, and the resin material is melted while being conveyed forward by a screw in the cylinder, and the molten resin is thermally decomposed in the cylinder of the extruder to generate monomer gas. The monomer gas generated in the cylinder of the extruder is liquefied by sending it to a heat exchanger from a gas discharge unit of the cylinder, and the liquefied monomer can be recovered.

In this case, the residue after the processing of the resin material is extruded from the tip of the cylinder of the extruder. When the resin material to be processed contains a filler, the filler is also contained in the residue extruded from the tip of the cylinder of the extruder. In order to deal with the residue extruded from the tip of the cylinder, it is conceivable to connect a storage container to the tip of the cylinder of the extruder and store the residue extruded from the tip of the cylinder of the extruder in the storage container. However, when the storage container becomes full, it becomes impossible to continue the processing of the resin material using the extruder. For this reason, it is necessary to make the storage container connected to the tip of the cylinder empty before the container becomes full by removing the residue stored in the storage container. During this work, the operation of the extruder must be stopped, which reduces the operating efficiency of the extruder and reduces the processing efficiency of resin materials such as waste plastics. Also, the necessity for this work may increase the cost of processing resin materials such as waste plastics. Further, since it is desirable to prevent the monomer gas in the storage container from diffusing to the surroundings when removing the residue from the storage container, the work of removing the residue from the storage container is difficult and heavy in workload.

Other problems and novel features will be apparent from the description of this specification and accompanying drawings.

### MEANS FOR SOLVING PROBLEMS

According to one embodiment, a resin processing apparatus includes a first extruder to which a first resin material is supplied and a second extruder to which the first extruder is connected and a residual resin discharged from the first extruder is supplied. A temperature of a cylinder of the first extruder on a downstream side relative to a first kneading section is set to be higher than a thermal decomposition temperature of the first resin material. A temperature of a cylinder of the second extruder on a downstream side relative to a position where the residual resin is supplied is set to be lower than a thermal decomposition temperature of the residual resin.

### EFFECTS OF THE INVENTION

According to one embodiment, it is possible to process resin materials such as waste plastics efficiently.

### BRIEF DESCRIPTIONS OF THE DRAWINGS

[FIG. 1] is an explanatory diagram illustrating a schematic configuration of a resin processing apparatus according to an embodiment.
[FIG. 2] is an explanatory diagram illustrating a configuration example of a pellet manufacturing system using the resin processing apparatus according to the embodiment.
[FIG. 3] is an explanatory diagram illustrating a configuration of a processing system of waste plastics studied by the inventor of the present invention.
[FIG. 4] is an explanatory diagram illustrating a resin processing apparatus according to a first modification.
[FIG. 5] is an explanatory diagram illustrating a resin processing apparatus according to a second modification.
[FIG. 6] is an explanatory diagram illustrating a resin processing apparatus according to a third modification.
[FIG. 7] is an explanatory diagram illustrating the resin processing apparatus according to the third modification.
[FIG. 8] is an explanatory diagram illustrating a resin processing apparatus according to a fourth modification.
[FIG. 9] is an explanatory diagram illustrating a resin processing apparatus according to a fifth modification.
[FIG. 10] is an explanatory diagram illustrating a resin processing apparatus according to a sixth modification.

### DETAILED DESCRIPTION OF PREFERRED EMBODIMENTS

Hereinafter, an embodiment will be described in detail with reference to drawings. Note that the members having the same function are denoted by the same reference characters throughout the drawings for describing the embodiment, and the repetitive description thereof will be omitted. Further, in the following embodiment, the description of the same or similar part will not be repeated in principle unless particularly required.

### <Configuration of Resin Processing Apparatus>

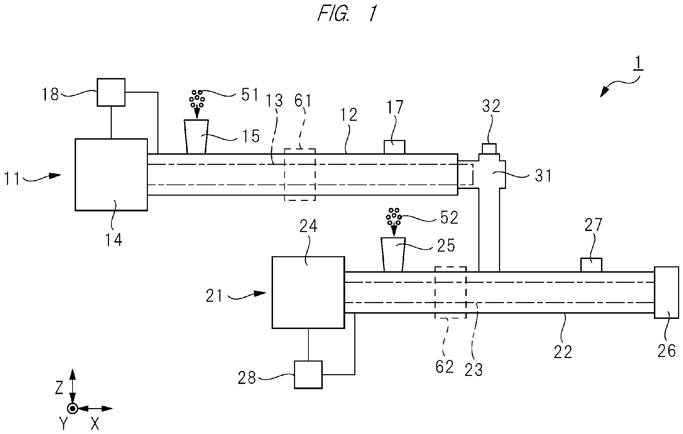

An overall configuration of a resin processing apparatus 1 according to the present embodiment will be described with reference to FIG. 1. FIG. 1 is an explanatory diagram (side view) illustrating a schematic configuration of the resin processing apparatus 1 according to the present embodiment.

The resin processing apparatus 1 illustrated in FIG. 1 includes an extruder 11 and an extruder 21, and has a configuration in which these extruders 11 and 21 are connected to each other.

The extruder 11 includes a cylinder (barrel) 12, a screw 13 rotatably arranged in the cylinder 12, a rotation drive mechanism 14 for rotating the screw 13 in the cylinder 12, a hopper (material feeder, material supply unit) 15 arranged on an upstream side (back end side) of the cylinder 12, and a control unit 18 for controlling the operation of the extruder 11. The extruder 21 includes a cylinder (barrel) 22, a screw 23 rotatably arranged in the cylinder 22, a rotation drive mechanism 24 for rotating the screw 23 in the cylinder 22, a hopper (material feeder, material supply unit) 25 arranged on an upstream side (back end side) of the cylinder 22, a die (metal mold) 26 attached to a tip of the cylinder 22 on a downstream side, and a control unit 28 for controlling the operation of the extruder 21. The cylinder 12 is made up of a plurality of cylinder blocks, which are arranged and connected in a direction from the upstream side to the downstream side. The cylinder 22 is made up of a plurality of cylinder blocks, which are arranged and connected in a direction from the upstream side to the downstream side. No molding die (corresponding to the die 26) is attached to the tip of the cylinder 12. In addition, the resin processing apparatus 1 illustrated in FIG. 1 further includes a connection unit 31 for connecting the cylinder 12 of the extruder 11 and the cylinder 22 of the extruder 21 to supply the material extruded from the cylinder 12 of the extruder 11 into the cylinder 22 of the extruder 21.

The hopper 15 is connected to an upper surface of the cylinder 12, so that a resin material 51 to be processed (such as waste plastic) can be supplied into the cylinder 12 through the hopper 15. Examples of the waste plastic include plastic products discarded after being used in general households or the like and plastic waste (parts that cannot be used as products) generated during the manufacturing process of plastic products.

The cylinder 12 has a temperature adjustment mechanism (temperature control means) such as a heater (not illustrated). The control unit 18 controls the temperature adjustment mechanism of the cylinder 12, whereby the temperature of the cylinder 12 can be controlled. The hopper 25 is connected to an upper surface of the cylinder 22, so that a resin material 52 can be supplied into the cylinder 22 through the hopper 25. The cylinder 22 has a temperature adjustment mechanism (temperature control means) such as a heater (not illustrated). The control unit 28 controls the temperature adjustment mechanism of the cylinder 22, whereby the temperature of the cylinder 22 can be controlled.

Note that, when referring to the "downstream side" and the "upstream side" with respect to the cylinder 12 and the screw 13, the "downstream side" means the downstream side of the flow of the material (resin) in the cylinder 12, and the "upstream side" means the upstream side of the flow of the material (resin) in the cylinder 12. Therefore, in the cylinder 12 and the screw 13, the side closer to the tip of the cylinder 12 is the downstream side, and the side farther from the tip of the cylinder 12 (that is, the side closer to the hopper 15) is the upstream side. Note that the tip of the cylinder 12 corresponds to the end of the cylinder 12 from which the resin is extruded, and thus corresponds to the end connected to the connection unit 31.

In addition, when referring to the "downstream side" and the "upstream side" with respect to the cylinder 22 and the screw 23, the "downstream side" means the downstream side of the flow of the material (resin) in the cylinder 22, and the "upstream side" means the upstream side of the flow of the material (resin) in the cylinder 22. Therefore, in the cylinder 22 and the screw 23, the side closer to the tip of the cylinder 22 is the downstream side, and the side farther from the tip of the cylinder 22 (that is, the side closer to the hopper 25) is the upstream side. Note that the tip of the cylinder 22 corresponds to the end of the cylinder 22 from which the resin is extruded, and thus corresponds to the end to which the die 26 is connected.

Two screws 13 are rotatably inserted and disposed inside the cylinder 12. Also, two screws 23 are rotatably inserted and disposed inside the cylinder 22. Therefore, each of the extruders 11 and 21 can also be considered as a twin-screw extruder. The two screws 13 are arranged to mesh with each other and rotate in the cylinder 12, and the two screws 23 are arranged to mesh with each other and rotate in the cylinder 22. In the cylinder 12, the resin material is conveyed and kneaded by the rotating screws 13. Further, in the cylinder 22, the resin material is conveyed and kneaded by the rotating screws 23.

In the present embodiment, the case where the number of screws 13 in the cylinder 12 is two is described, but as another aspect, the number of screws 13 in the cylinder 12 may be one. Further, in the present embodiment, the case where the number of screws 23 in the cylinder 22 is two is described, but as another aspect, the number of screws 23 in the cylinder 22 may be one.

The cylinder 12 has an opening at a position where the hopper 15 is connected, and the hopper 15 is connected so as to communicate with the opening. In this way, the resin material 51 put into the hopper 15 is supplied into the cylinder 12 through the opening of the cylinder 12.

The cylinder 12 has a gas discharge unit (gas exhaust port, gas recovery mechanism) 17 that discharges gas produced (generated) in the cylinder 12 to the outside of the cylinder 12. In the cylinder 12, the gas discharge unit 17 is located on the downstream side relative to the connection position of the hopper 15. The gas generated in the cylinder 12 is discharged (exhausted) from the gas discharge unit 17 to the outside of the cylinder 12 and is sent to a heat exchanger 44 described later through a gas pipe 46 described later.

The cylinder 22 has an opening (hopper opening) at a position where the hopper 25 is connected, and the hopper 25 is connected so as to communicate with the hopper opening. In this way, the resin material 52 put into the hopper 25 is supplied into the cylinder 22 through the hopper opening of the cylinder 22.

The extruder 11 is connected to the extruder 21 such that a residual resin discharged from the extruder 11 is supplied to the extruder 21. Specifically, the cylinder 12 of the extruder 11 is connected to the cylinder 22 of the extruder 21 via the connection unit 31. The tip of the cylinder 12 is connected to the connection unit 31, and an opening of the tip of the cylinder 12 communicates with the connection unit 31. The connection unit 31 has a passageway (cavity) through which the material (residual resin) discharged from the tip of the cylinder 12 can pass. The cylinder 22 has an opening (opening for the connection unit 31) at the position where the connection unit 31 is connected, and the connection unit 31 is connected so as to communicate with the opening. In this way, the material (residual resin) discharged from the extruder 11, that is, the material (residual resin) discharged from the tip of the cylinder 12 passes through the inside of the connection unit 31 and is supplied into the cylinder 22 through the opening (opening for the connection unit 31) of the cylinder 22. The connection unit 31 can function as a path through which the material (residual resin) discharged from the tip of the cylinder 12 reaches (is supplied to) the inside of the cylinder 22. In the cylinder 22, the connection position of the connection unit 31 is located on the downstream side relative to the connection position of the hopper 25. Further, in the case of FIG. 1, the height position of the cylinder 12 is higher than the height position of the cylinder 22, the connection unit 31 is connected to the upper surface side of cylinder 22, and the material (residual resin) extruded from the tip of cylinder 12 is supplied into the cylinder 22 from the upper surface side of the cylinder 22 through the connection unit 31.

The cylinder 22 of the extruder 21 has a gas discharge unit (gas exhaust port, gas recovery mechanism) 27 that discharges gas that has flown into the cylinder 22 from the cylinder 12 to the outside of the cylinder 22. In the cylinder 22, the gas discharge unit 27 is located on the downstream side relative to the connection position of the hopper 25 and located on the downstream side relative to the connection position of the connection unit 31. The gas that has flown into the cylinder 22 from the cylinder 12 through the connection unit 31 is discharged (exhausted) from the gas discharge unit 27 to the outside of the cylinder 22 and is sent to the heat exchanger 44 described later through the gas pipe 46 described later.

The die 26 can function to shape the kneaded resin mixture (molten resin) extruded from the cylinder 22 into a predetermined cross-sectional shape (for example, strand shape) and discharge it. Therefore, the die 26 is a die (die, metal mold) for extrusion molding. Since the kneaded resin mixture extruded from the tip of the cylinder 22 needs to be molded into a predetermined shape (here, strand shape), the die 26 for resin molding is attached to the tip of the cylinder 22. However, since it is sufficient that the material extruded from the tip of the cylinder 12 can be supplied into the cylinder 22 through the connection unit 31, no die (metal mold) for resin molding is attached to the tip of the cylinder 12.

### <Pellet Manufacturing System>

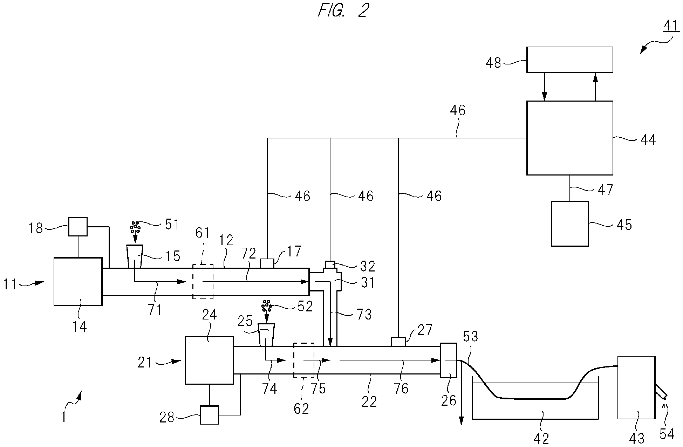

FIG. 2 is an explanatory diagram illustrating a configuration example of a pellet manufacturing system (resin pellet manufacturing apparatus) 41 as a resin processing system using the resin processing apparatus 1 according to the present embodiment. The pellet manufacturing system 41 according to the present embodiment is a manufacturing system (manufacturing apparatus) for resin pellets, but can also function as a processing system (processing apparatus) for resin materials such as waste plastics.

The pellet manufacturing system 41 illustrated in FIG. 2 further includes a cooling bath (strand bath) 42, a cutting apparatus 43, the heat exchanger 44, and a recovery container 45, in addition to the above-described resin processing apparatus 1.

Next, the operation of the pellet manufacturing system 41 including the resin processing apparatus 1 will be described with reference to FIG. 1 and FIG. 2. Note that the extruder 11 constituting the resin processing apparatus 1 is controlled by the control unit 18 and the extruder 21 constituting the resin processing apparatus 1 is controlled by the control unit 28, but the extruder 11 and the extruder 21 can also be controlled by a common control unit.

The resin material 51 is supplied from the hopper 15 into the cylinder 12, and the resin material 52 is supplied from the hopper 25 into the cylinder 22.

The resin material 51 supplied from the hopper 15 into the cylinder 12 contains a resin component and is, for example, crushed various used resin products, and waste plastics can be applied thereto. The resin material 51 supplied from the hopper 15 into the cylinder 12 may contain, in addition to the resin component, a filler other than the resin component (for example, an inorganic filler). Examples of the filler include glass fiber, carbon fiber, talc, and calcium carbonate.

In addition, a thermal decomposition temperature T₁ of the resin material 51 will be referred to below, but the thermal decomposition temperature T₁ of the resin material 51 corresponds to the temperature at which the resin component contained in the resin material 51 supplied from the hopper 15 into the cylinder 12 thermally decomposes.

In the extruder 11, the resin material 51 supplied from the hopper 15 into the cylinder 12 is plasticized into a molten resin while being conveyed forward in the cylinder 12 by the rotation of the screw 13. In FIG. 1 and FIG. 2, a kneading section (plasticizing section) 61 in the cylinder 12 of the extruder 11 is indicated by surrounding it by a dotted line. The kneading section 61 corresponds to a region where the resin material 51 supplied from the hopper 15 into the cylinder 12 is plasticized into a molten resin in the cylinder 12, and can be regarded as the plasticizing section. In the cylinder 12 of the extruder 11, the kneading section 61 is located on the downstream side relative to the connection position of the hopper 15 and is located on the upstream side relative to the gas discharge unit 17.

In the cylinder 12, the resin material 51 in the cylinder 12 is not yet melted and is in a solid state on the upstream side relative to the kneading section 61, but the resin material 51 is plasticized in the kneading section 61 to be in a molten state (molten resin), and the resin material 51 in the cylinder 12 is a molten resin on the downstream side relative to the kneading section 61. Therefore, an arrow 71 in FIG. 2 indicates the flow of the resin material 51 in a solid state, and an arrow 72 in FIG. 2 indicates the flow of the resin material 51 in a molten state (molten resin). When the resin material 51 supplied from the hopper 15 into the cylinder 12 contains a filler, the molten resin in the cylinder 12 contains the filler.

The temperature of the cylinder 12 of the extruder 11 on the downstream side relative to the kneading section 61 is set to be higher than the thermal decomposition temperature T₁ of the resin material 51. Specifically, the temperature of the cylinder 12 on the downstream side relative to the kneading section 61 is set to a temperature (for example, 400°C) higher than the thermal decomposition temperature T₁ of the resin material 51. The temperature of the cylinder 12 of the extruder 11 can be controlled by the control unit 18 controlling the temperature adjustment mechanism of the cylinder 12. When the "set temperature of the cylinder 12" is mentioned in the following description, it means the "temperature of the cylinder 12 on the downstream side relative to the kneading section 61". The temperature of the cylinder 12 on the upstream side relative to the kneading section 61 can be set to an appropriate temperature as necessary, and may be equal to or lower than the thermal decomposition temperature T₁ of the resin material 51.

The resin material 51 supplied from the hopper 15 into the cylinder 12 is plasticized in the kneading section 61 of the cylinder 12 to be a molten resin, and is sent further forward (downstream side) in the cylinder 12 by the rotation of the screw 13. Since the set temperature of the cylinder 12 is set to be higher than the thermal decomposition temperature T₁ of the resin material 51, the resin component in the molten resin in the cylinder 12 is heated to a temperature higher than the thermal decomposition temperature T₁ and is thermally decomposed on the downstream side relative to the kneading section 61, thereby becoming gasified (gaseous) monomer (hereinafter, referred to as "monomer gas"). The monomer gas generated in the cylinder 12 is discharged from the gas discharge unit 17 of the cylinder 12 to the outside of the cylinder 12 and is sent to the heat exchanger 44 through the gas pipe (gas piping) 46.

A part of the molten resin in the cylinder 12 is thermally decomposed into monomer gas and is sent from the gas discharge unit 17 through the gas pipe 46 to the heat exchanger 44, while the remainder (the molten resin that has not been thermally decomposed) is extruded from the tip of the cylinder 12. Further, the filler contained in the molten resin in the cylinder 12 is not thermally decomposed. Therefore, the filler contained in the molten resin in the cylinder 12 is extruded (discharged) from the tip of the cylinder 12 together with the molten resin that has not been thermally decomposed (monomerized). The residual resin (resin material containing filler) which is the material extruded from the tip of the cylinder 12 passes through the connection unit 31 and is supplied into the cylinder 22 from the opening of the cylinder 22 (opening for connection unit 31). An arrow 73 in FIG. 2 indicates the flow of the residual resin extruded from the tip of the cylinder 12. The residual resin (73) extruded from the tip of the cylinder 12 is supplied into the cylinder 22 through the connection unit 31.

Ideally, all of the monomer gas generated in the cylinder 12 is discharged from the gas discharge unit 17 to the outside of the cylinder 12 and is sent to the heat exchanger 44 through the gas pipe 46. However, in reality, a part of the monomer gas generated in the cylinder 12 is sent from the gas discharge unit 17 through the gas pipe 46 to the heat exchanger 44, and the remainder is discharged from the tip of the cylinder 12 and flows into the connection unit 31 together with the molten resin and filler that have not been thermally decomposed. A part of the monomer gas that has flown from the cylinder 12 into the connection unit 31 is discharged to the outside of the connection unit 31 from a gas discharge unit (gas exhaust port, gas recovery mechanism) 32 provided on the connection unit 31 and is sent to the heat exchanger 44 through the gas pipe 46, and the remainder flows from the connection unit 31 into the cylinder 22 together with the molten resin and filler.

The resin material 52 supplied from the hopper 25 into the cylinder 22 is a resin material (raw material) for manufacturing resin pellets. Therefore, as the resin material 52 supplied from the hopper 25 into the cylinder 22, a resin material suitable for manufacturing resin pellets can be used. The resin component contained in this resin material 52 may be the same type of resin as the resin component contained in the resin material 51 supplied from the hopper 15 into the cylinder 12. In addition to the resin component, the resin material 52 may further contain a filler suitable for manufacturing resin pellets.

In addition, a thermal decomposition temperature T₂ of the resin material 52 will be referred to below, but the thermal decomposition temperature T₂ of the resin material 52 corresponds to the temperature at which the resin component contained in the resin material 52 supplied from the hopper 25 into the cylinder 22 thermally decomposes.

In the extruder 21, the resin material 52 supplied from the hopper 25 into the cylinder 22 is plasticized into a molten resin while being conveyed forward in the cylinder 22 by the rotation of the screw 23. In FIG. 1 and FIG. 2, a kneading section (plasticizing section) 62 in the cylinder 22 of the extruder 21 is indicated by surrounding it by a dotted line. The kneading section 62 corresponds to a region where the resin material 52 supplied from the hopper 25 into the cylinder 22 is plasticized in the cylinder 22 into a molten resin, and can be regarded as the plasticizing section. In the cylinder 22 of the extruder 21, the kneading section 62 is located on the downstream side relative to the connection position of the hopper 25 and is located on the upstream side relative to the connection position of the connection unit 31.

In the cylinder 22, the resin material 52 in the cylinder 22 is not yet melted and is in a solid state on the upstream side relative to the kneading section 62, but the resin material 52 is plasticized in the kneading section 62 to be in a molten state (molten resin), and the resin material 52 in the cylinder 22 is a molten resin on the downstream side relative to the kneading section 62. Therefore, an arrow 74 in FIG. 2 indicates the flow of the resin material 52 in a solid state, and an arrow 75 in FIG. 2 indicates the flow of the resin material 52 in a molten state (molten resin).

Since the material (residual resin) extruded from the tip of the cylinder 12 is supplied into the cylinder 22 through the connection unit 31, the resin material 52 supplied from the hopper 25 into the cylinder 22 is kneaded with the material (residual resin) supplied into the cylinder 22 from the tip of the cylinder 12 through the connection unit 31 by the screw 23 to form a kneaded resin mixture. Namely, the resin material 52 supplied from the hopper 25 into the cylinder 22 and the material (residual resin) supplied from the cylinder 12 through the connection unit 31 into the cylinder 22 are kneaded by the screw 23 in the cylinder 22 to form a kneaded resin mixture, and the formed kneaded resin mixture is conveyed in the cylinder 22 toward the tip side (downstream side) by the screw 23. The formed kneaded resin mixture is in a molten state (molten resin). An arrow 76 in FIG. 2 indicates the flow of this kneaded resin mixture.

Therefore, in the cylinder 22, the molten resin on the upstream relative to the connection position of the connection unit 31 is composed of the resin component contained in the resin material 52, while the molten resin (kneaded resin mixture) on the downstream side relative to the connection position of the connection unit 31 is the kneaded mixture of the resin component contained in the resin material 51, the resin component contained in the resin material 52, and the filler contained in the resin material 51.

The temperature of the cylinder 22 of the extruder 21 on the downstream side relative to the position where the residual resin (73) is supplied into the cylinder 22 (that is, the connection position of the connection unit 31) is set to be lower than the thermal decomposition temperature of the residual resin (73). Specifically, the temperature of the cylinder 22 on the downstream side relative to the position where the residual resin (73) is supplied (that is, the connection position of the connection unit 31) is set to a temperature (for example, 100 to 300°C) lower than the thermal decomposition temperature of the residual resin (73). The temperature of the cylinder 22 of the extruder 21 can be controlled by the control unit 28 controlling the temperature adjustment mechanism of the cylinder 22. When the "set temperature of the cylinder 22" is mentioned in the following description, it means the "the temperature of the cylinder 22 on the downstream side relative to the position where the residual resin (73) extruded from the cylinder 12 of the extruder 11 is supplied into the cylinder 22 (that is, the connection position of the connection unit 31)". The temperature of the cylinder 22 on the upstream side relative to the position where the residual resin (73) is supplied (that is, the connection position of the connection unit 31) can be set to an appropriate temperature as necessary. In addition, since the resin component contained in the residual resin (73) extruded from the cylinder 12 of the extruder 11 is the same as the resin component contained in the resin material 51, the thermal decomposition temperature of the residual resin (73) supplied from the extruder 11 into the cylinder 22 of the extruder 21 is substantially the same as the thermal decomposition temperature T₁ of the resin material 51.

Since the set temperature of the cylinder 22 is set to a temperature lower than the thermal decomposition temperature of the residual resin (73), the residual resin (73) extruded from the cylinder 12 of the extruder 11 and supplied into the cylinder 22 of the extruder 21 is not heated to a temperature equal to or higher than the thermal decomposition temperature of the residual resin in the cylinder 22, and is thus hardly decomposed in the cylinder 22. Therefore, it is possible to suppress or prevent the monomer gas from being generated by the thermal decomposition of the molten resin (kneaded resin mixture) in the cylinder 22. Further, the filler contained in the molten resin is not thermally decomposed in the cylinder 22.

Also, it is more preferable that the set temperature of the cylinder 22 is set to a temperature (for example, 100 to 300° C) that is lower than the thermal decomposition temperature of the residual resin and lower than the thermal decomposition temperature T₂ of the resin material 52. In this way, the resin component in the molten resin (kneaded resin mixture) sent forward in the cylinder 12 by the rotation of the screw 13 is neither heated to a temperature equal to or higher than the thermal decomposition temperature of the residual resin (73) nor heated to a temperature equal to or higher than the thermal decomposition temperature T₂ of the resin material 52, and is thus hardly thermally decomposed. Therefore, it is possible to further suppress or prevent the monomer gas from being generated by the thermal decomposition of the molten resin (kneaded resin mixture) in the cylinder 22.

In addition, it is preferable that the set temperature of the cylinder 22 of the extruder 2 is higher than the temperature at which the monomer gas generated in the cylinder 12 of the extruder 1 is liquefied. In other words, the set temperature of the cylinder 22 is set to a temperature (for example, 100 to 300°C) at which the monomer gas generated in the cylinder 12 and flowing from the cylinder 12 through the connection unit 31 into the cylinder 22 is not liquefied in the cylinder 22. In this way, it is possible to suppress or prevent the monomer gas generated in the cylinder 12 and flowing from the cylinder 12 through the connection unit 31 into the cylinder 22 from being liquefied in the cylinder 22. The monomer gas generated in the cylinder 12 and flowing from the cylinder 12 through the connection unit 31 into the cylinder 22 is discharged from the gas discharge unit 27 of the cylinder 22 to the outside of the cylinder 22 and is sent to the heat exchanger 44 through the gas pipe 46.

The molten resin (kneaded resin mixture) sent forward in the cylinder 22 by the rotation of the screw 23 is extruded from the die 26 attached to the tip of the cylinder 22. At this time, the molten resin (kneaded resin mixture) is formed into a strand shape by the die 26 and is extruded from the die 26 as a strand (resin strand) 53. The strand 53 is the material extruded from the extruder 21 and is also the material that contains the residual resin supplied from the extruder 11 to the extruder 21.

The strand 53 extruded from the die 26 is cooled and solidified (cured) in the cooling bath 42. The solidified strand 53 is cut to a predetermined length by the cutting apparatus 43. In this way, resin pellets 54 are manufactured. In the pellet manufacturing system 41, the resin processing apparatus 1 can function as a strand manufacturing apparatus.

When the resin material 51 supplied from the hopper 15 into the cylinder 12 contains a filler, the residual resin (73) extruded from the tip of the cylinder 12 and supplied into the cylinder 22 through the connection unit 31 also contains the filler, and thus the strand 53 and the resin pellets 54 also contain the filler contained in the resin material 51. Further, when the resin material 52 supplied from the hopper 25 into the cylinder 22 contains a filler, the strand 53 and the resin pellets 54 also contain the filler contained in the resin material 52.

The monomer gas sent from the gas discharge units 17, 27, and 32 through the gas pipe 46 to the heat exchanger 44 is cooled and liquefied in the heat exchanger 44, thereby becoming a liquid monomer. The heat exchanger 44 can cool and liquefy the monomer gas by exchanging heat with cooling water 48. The liquid monomer produced in the heat exchanger 44 is sent to the recovery container 45 through a pipe (liquid piping) 47 and is stored in the recovery container 45. The liquid monomer stored in the recovery container 45 is taken out for reuse as required.

In the present embodiment, the case of manufacturing the resin pellets 54 using the strand 53 extruded from the extruder 21 has been described as the method of processing a resin material. As another embodiment, instead of manufacturing the resin pellets 54 using the strand 53 extruded from the extruder 21, the case of letting the strand 53 extruded from the extruder 21 release, the case of storing the strand 53 extruded from the extruder 21 in a container (not illustrated), and the like are also possible. In that case, the solidified strand 53 can be discarded later.

### <Background of Study>

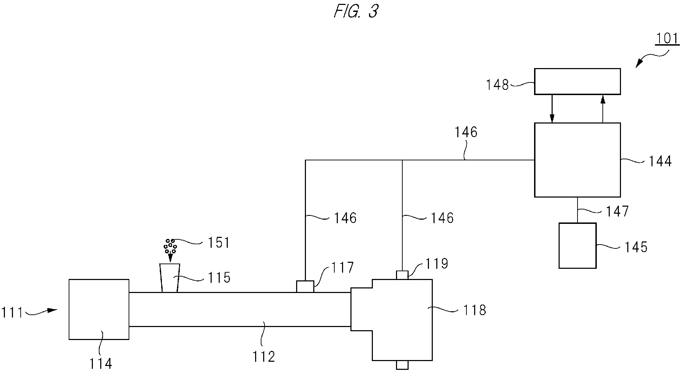

FIG. 3 is an explanatory diagram illustrating a configuration of a processing system (processing apparatus) 101 of resin materials such as waste plastics studied by the inventor of the present invention.

The processing system 101 illustrated in FIG. 3 includes an extruder 111, a heat exchanger 144, and a recovery container 145. The extruder 111 includes a cylinder 112, a screw disposed in the cylinder 112, a rotation drive mechanism 114 for rotating the screw in the cylinder 112, a hopper 115 arranged on the upstream side of the cylinder 112, and a gas discharge unit 117 that discharges gas produced in the cylinder 112 to the outside of the cylinder 112. Further, a tank (container) 118 for storing residue is attached to the tip of the cylinder 112 of the extruder 111.

Next, the operation of the processing system 101 illustrated in FIG. 3 will be described.

A resin material 151 is supplied from the hopper 115 into the cylinder 112. The resin material 151 supplied from the hopper 115 into the cylinder 112 is, for example, crushed various used resin products, and waste plastics can be applied thereto. The resin material 151 supplied from the hopper 115 into the cylinder 112 further contains a filler in addition to the resin component.

The resin material 151 supplied from the hopper 115 into the cylinder 112 is melted into a molten resin while being sent forward in the cylinder 112 by the rotation of the screw. At this time, the temperature of the cylinder 112 is set to a temperature higher than the thermal decomposition temperature of the resin material 151. In this way, the molten resin in the cylinder 112 is thermally decomposed to generate monomer gas. The monomer gas generated in the cylinder 112 is discharged from the gas discharge unit 117 of the cylinder 112 to the outside of the cylinder 112 and is sent to the heat exchanger 144 through the gas pipe 146.

A part of the molten resin in the cylinder 122 is thermally decomposed into monomer gas and is sent from the gas discharge unit 117 through the gas pipe 146 to the heat exchanger 144, while the remainder (the molten resin that has not been thermally decomposed) is extruded as a residual resin from the tip of the cylinder 112 and flows into the tank 118. Further, the filler contained in the molten resin in the cylinder 112 also flows into the tank 118 from the tip of the cylinder 112 together with the molten resin that has not been thermally decomposed.

In addition, a part of the monomer gas generated in the cylinder 112 is sent from the gas discharge unit 117 through the gas pipe 146 to the heat exchanger 144, and the remainder flows into the tank 118 from the tip of the cylinder 112 together with the molten resin that has not been thermally decomposed. The monomer gas that has flown from the cylinder 112 into the tank 118 is discharged from a gas discharge unit 119 provided on the tank 118 to the outside of the tank 118, and is sent to the heat exchanger 144 through the gas pipe 146.

The monomer gas sent from the gas discharge units 117 and 119 through the gas pipe 146 to the heat exchanger 144 is cooled and liquefied in the heat exchanger 144, thereby becoming a liquid monomer. The heat exchanger 144 can cool and liquefy the monomer gas by exchanging heat with cooling water 148. The liquid monomer produced in the heat exchanger 144 is sent to the recovery container 145 through a pipe 147 and is stored in the recovery container 145. The liquid monomer stored in the recovery container 145 is taken out for reuse as required.

As the operation of the processing system 101 illustrated in FIG. 3 continues, the amount of residual resin that is extruded from the tip of the cylinder 112 and flows into the tank 118 and stored therein (hereinafter, referred to as the stored amount) gradually increases. When the stored amount in the tank 118 increases, it is necessary to make the tank 118 empty before the tank 118 becomes full by removing the residual resin stored in the tank 118 from the tank 118.

While this work is being performed, it is necessary to stop the operation of the extruder 111, which reduces the operating efficiency of the extruder 111 and the processing system 101 using the same, and reduces the processing efficiency of resin materials such as waste plastics. Also, the necessity for this work may increase the cost of processing resin materials such as waste plastics. Further, it is conceivable that the monomer gas in the tank 118 is diffused to the surroundings when removing the residual resin stored in the tank 118 from the tank 118. If the monomer gas is a gas type that is undesirable for diffusing to the surroundings, it is necessary to prevent the monomer gas in the tank 118 from diffusing to the surroundings when removing the residual resin stored in the tank 118 from the tank 118, but this makes the work of removing the residual resin stored in the tank 118 difficult and increases the load for this work.

### <Main Features and Effects>

The resin processing apparatus 1 according to the present embodiment includes the extruder 11 to which the resin material 51 is supplied and the extruder 21 to which the extruder 11 is connected and the residual resin (73) discharged from the extruder 11 is supplied. Specifically, the cylinder 12 of the extruder 11 is connected to the cylinder 22 of the extruder 21 such that the residual resin discharged (extruded) from the tip of the cylinder 12 of the extruder 11 is supplied into the cylinder 22 of the extruder 21. In the case of FIG. 1 above, the cylinder 12 of the extruder 11 is connected to the cylinder 22 of the extruder 21 via the connection unit 31, and the residual resin (73) discharged (extruded) from the tip of the cylinder 12 is supplied into the cylinder 22 of the extruder 21 through the connection unit 31.

One of the main features of the present embodiment is that the temperature of the cylinder of the extruder 11 on the downstream side relative to the kneading section 61 is set to be higher than the thermal decomposition temperature T₁ of the resin material 51, and the temperature of the cylinder 22 of the extruder 21 on the downstream side relative to the position where the residual resin (73) is supplied is set to be lower than the thermal decomposition temperature of the residual resin (73).

Of the extruders 11 and 21 constituting the resin processing apparatus 1, the extruder 11 is used to thermally decompose the resin material 51, and the extruder 21 is used to process the residual resin (that is, the residue after thermal decomposition) discharged from the cylinder 12 of the extruder 11. In the case of FIG. 2 above, the extruder 21 is used to manufacture resin pellets using the residual resin discharged from the cylinder 12 of the extruder 11.

When the set temperature of the cylinder 12 is set to be lower than the thermal decomposition temperature T₁ of the resin material 51 unlike the present embodiment, the resin material 51 is hardly decomposed in the cylinder 12, and thus almost no monomer gas is generated in the cylinder 12. In this case, the monomer gas is hardly discharged from the gas discharge unit 17 and the gas discharge unit 32 to the outside of the cylinder 12, and it is difficult to recover the liquefied monomer in the heat exchanger 44.

In contrast, in the present embodiment, in the extruder 11 intended to thermally decompose the resin material 51, the set temperature of the cylinder 12 (the set temperature of the cylinder 12 on the downstream side relative to the kneading section 61) is set to be higher than the thermal decomposition temperature T₁ of the resin material 51 such that the thermal decomposition of the resin material 51 is performed accurately in the cylinder 12. As a result, the resin component contained in the resin material 51 supplied from the hopper 15 into the cylinder 12 is heated to a temperature higher than the thermal decomposition temperature T₁ to be thermally decomposed, thereby generating the monomer gas, so that at least a part of the generated monomer gas can be discharged from the gas discharge unit 17 provided on the cylinder 12 and the gas discharge unit 32 provided on the connection unit 31. The monomer gas discharged from the gas discharge unit 17 and the gas discharge unit 32 can be liquefied in the heat exchanger 44. The monomer liquefied by the heat exchanger 44 can be stored in the recovery container 45 or the like for reuse.

On the other hand, the set temperature of the cylinder 22 of the extruder 21 is set to a temperature lower than the thermal decomposition temperature of the residual resin (73) discharged from the extruder 11 and supplied to the cylinder 22 such that the residual resin is not thermally decomposed in the cylinder 22. In order to prevent the thermal decomposition of not only the residual resin (73) supplied from the extruder 11 into the cylinder 22 but also the resin material 52, it is preferable that the set temperature of the cylinder 22 of the extruder 21 is set to a temperature lower than the thermal decomposition temperature of the residual resin and lower than the thermal decomposition temperature T₂ of the resin material 52.

When the set temperature of the cylinder 22 is set to a temperature equal to or higher than the thermal decomposition temperature of the residual resin (73) supplied from the extruder 11 into the cylinder 22 and the set temperature of the cylinder 22 is set to a temperature equal to or higher than the thermal decomposition temperature T₂ of the resin material 52 unlike the present embodiment, monomer gas is generated by the thermal decomposition of the resin component in the cylinder 22, and thus the ratio of the resin component in the kneaded resin mixture formed in the cylinder 22 decreases by the amount of the generated monomer gas. When the ratio of the resin component in the kneaded resin mixture formed in the cylinder 22 decreases, it becomes difficult to stably convey the kneaded resin mixture in the cylinder 22 by the screw 23, and it also becomes difficult to stably extrude the kneaded resin mixture from the die 26 connected to the tip of the cylinder 22. Further, when the monomer gas is generated in the cylinder 22, there is a possibility that the monomer gas generated in the cylinder 22 may leak out of the cylinder 22 into the atmosphere.

In contrast, in the present embodiment, the set temperature of the cylinder 22 of the extruder 21 is set to a temperature lower than the thermal decomposition temperature of the residual resin (73) supplied from the extruder 11 into the cylinder 22. It is more preferable that the set temperature of the cylinder 22 of the extruder 21 is set to a temperature lower than the thermal decomposition temperature of the residual resin (73) and lower than the thermal decomposition temperature T₂ of the resin material 52. In this way, it is possible to suppress or prevent the thermal decomposition of the resin component in the cylinder 22. In other words, by setting the set temperature of the cylinder 22 to be lower than the thermal decomposition temperature of the residual resin (73), it is possible to suppress or prevent the resin component contained in the residual resin (73) discharged from the extruder 11 and supplied into the cylinder 22 from being thermally decomposed in the cylinder 22. Further, by setting the set temperature of the cylinder 22 to a temperature lower than the thermal decomposition temperature T₂ of the resin material 52, it is possible to suppress or prevent the resin component contained in the resin material 52 supplied from the hopper 25 into the cylinder 22 from being thermally decomposed in the cylinder 22. In this way, since it is possible to accurately suppress or prevent the generation of monomer gas due to the thermal decomposition of the resin component in the cylinder 22, it is possible to more accurately prevent the monomer gas generated in the cylinder 22 from leaking out of the cylinder 22 into the atmosphere. In addition, since it is possible to suppress or prevent the decrease in the ratio of resin component in the kneaded resin mixture formed in the cylinder 22 due to the thermal decomposition, it is possible to stably and accurately convey the kneaded resin mixture in the cylinder 22 by the screw 23, and it is possible to stably and accurately extrude the kneaded resin mixture from the die 26 connected to the tip of the cylinder 22. By cutting the kneaded resin mixture (strand 53) extruded from the die 26 by the cutting apparatus 43 or the like, the resin pellets 54 can be accurately formed. Therefore, the operation of the resin processing apparatus 1 is stabilized, and the resin pellets 54 can be manufactured stably.

In addition, in the present embodiment, the resin material 52 supplied from the hopper 25 into the cylinder 22 and the residual resin (73) extruded from the cylinder 12 and supplied into the cylinder 22 are kneaded by the screw 23 to form the kneaded resin mixture, and the kneaded resin mixture is extruded from the die 26 connected to the tip of the cylinder 22. The residual resin (73) extruded from the cylinder 12 and supplied into the cylinder 22 has a fairly low resin component content. This is because the resin material 51 is thermally decomposed in the cylinder 12 to generate monomer gas, and thus the resin component content in the residual resin (73) extruded from the cylinder 12 and supplied into the cylinder 22 is fairly lower than the resin component content in the resin material 51 at the stage when it is supplied from the hopper 15 into the cylinder 12. Therefore, when the resin material is not supplied from the hopper 25 into the cylinder 22 unlike the present embodiment, the residual resin (that is, material having a fairly low resin component content) extruded from the cylinder 12 and supplied into the cylinder 22 is conveyed by the screw 23 and is extruded from the die 26 connected to the tip of the cylinder 22. However, it is difficult to stably convey the material having a fairly low resin component content by the screw 23, and to stably extrude the material having a fairly low resin component content from the die 26.

In contrast, in the present embodiment, the resin material 52 is supplied from the hopper 25 into the cylinder 22. The resin material 52 supplied from the hopper 25 into the cylinder 22 and the residual resin (73) extruded from the cylinder 12 and supplied into the cylinder 22 are kneaded by the screw 23 in the cylinder 22 to form the kneaded resin mixture. Therefore, even when the resin component content in the residual resin (73) supplied from the cylinder 12 into the cylinder 22 is fairly low, the resin component content in the kneaded resin mixture formed in the cylinder 22 can be made higher than the resin component content in the residual resin (73) supplied from the cylinder 12 into the cylinder 22. In this way, the kneaded resin mixture formed in the cylinder 22 can be stably conveyed by the screw 23 and can also be stably extruded from the die 26 connected to the tip of the cylinder 22. Therefore, the operation of the resin processing apparatus 1 is stabilized, and the resin pellets 54 can be manufactured stably.

The case where a molding die is connected to the tip of the cylinder 12 and the strand extruded from the die is cut to manufacture pellets unlike the present embodiment will be assumed. In this case, the material to be extruded from the die connected to the tip of the cylinder 12 has a low resin component content, and it is thus difficult to extrude it stably from the die connected to the tip of the cylinder 12. Also, there is a possibility that monomer gas generated in the cylinder 12 may leak out of the die into the atmosphere. Further, in order to increase the resin component content in the material to be extruded from the die connected to the tip of the cylinder 12, it is necessary to suppress the thermal decomposition of the resin material 51 in the cylinder 12, but this leads to the reduction in the amount of monomer gas generated in the cylinder 12 and the amount of monomer recovered by liquefying the monomer gas in the heat exchanger 44 is reduced. In addition, since the set temperature of the cylinder 12 is set to a temperature higher than the thermal decomposition temperature T₁ of the resin material 51 such that the resin material 51 can be thermally decomposed accurately, it is difficult to strictly control the resin component content in the material extruded from the cylinder 12. Therefore, it is not advisable to connect a molding die to the tip of the cylinder 12 and manufacture pellets by cutting the strand extruded from the die.

In contrast, in the present embodiment, of the extruders 11 and 21 constituting the resin processing apparatus 1, the extruder 11 having the cylinder 12 is used to thermally decompose the resin material 51, and the extruder 21 having the cylinder 22 is used to manufacture resin pellets using the residual resin extruded from the cylinder 12 of the extruder 11. Also, the resin material 52 is supplied from the hopper 25 into the cylinder 22 of the extruder 21 such that resin pellets can be manufactured using the residual resin supplied from the cylinder 12 of the extruder 11 into the cylinder 22 of the extruder 21. In this way, the resin material 52 supplied from the hopper 25 into the cylinder 22 and the residual resin supplied from the cylinder 12 into the cylinder 22 are kneaded to form a kneaded resin mixture, and the kneaded resin mixture can be stably extruded from the die 26 connected to the tip of the cylinder 22. In addition, it is possible to more accurately prevent the monomer gas generated in the cylinder 12 from leaking into the atmosphere.

In the case of the processing system 101 according to the studied example above, since the residual resin extruded from the tip of the cylinder 112 of the extruder 111 is stored in the tank 118, when the stored amount in the tank 118 increases, it is necessary to make the tank 118 empty before the tank 118 becomes full by removing the residual resin stored in the tank 118 from the tank 118.

In contrast, in the present embodiment, the residual resin extruded from the tip of the cylinder 12 is supplied into the cylinder 22 to which the cylinder 12 is connected. Then, the residual resin supplied from the cylinder 12 into the cylinder 22 and the resin material 52 supplied from the hopper 25 into the cylinder 22 are kneaded by the screw 23 to form a kneaded resin mixture, and the resin pellets 54 are manufactured by cutting the kneaded resin mixture extruded from the die 26 connected to the tip of the cylinder 22. Therefore, there is no need to perform the work of emptying the tank 118 by removing the material stored in the tank 118 from the tank 118, which is necessary in the case of the processing system 101 according to the studied example above. Since the resin processing apparatus 1 can be operated continuously for a long period of time, the operating efficiency of the resin processing apparatus 1 and the pellet manufacturing system 41 including the same can be improved. Moreover, the processing efficiency of the resin material 51 can be improved. When a waste plastic is used as the resin material 51, the processing efficiency of the waste plastic can be improved, and the cost of processing the waste plastic can be reduced. Therefore, resin materials such as waste plastics can be efficiently processed for recycling. In addition, since the residual resin extruded from the tip of the cylinder 12 is supplied into the cylinder 22 to which the cylinder 12 is connected, it becomes easier to prevent the monomer gas generated in the cylinder 12 from diffusing to the surroundings.

Next, the prevention of the monomer gas generated in the cylinder 12 from diffusing to the surroundings will be described.

In the cylinder 12, the kneading section 61 is located on the downstream side relative to the connection position of the hopper 15 and on the upstream side relative to the gas discharge unit 17. In the case where there is no gas discharge unit 17 as illustrated in FIG. 1 described later, the kneading section 61 is located on the downstream side relative to the tip of the cylinder 12. In the kneading section 61 of the cylinder 12, the molten resin formed by plasticizing the resin material 51 fills the conveyance space in the cylinder 12 (the space in which the resin material is conveyed by the screw 13). Therefore, the monomer gas generated by the thermal decomposition of the molten resin in the cylinder 12 cannot return to the upstream side relative to the kneading section 61 by passing through the kneading section 61 in the cylinder 12, and it is thus possible to prevent the monomer gas from being discharged to the outside from the hopper 15. The monomer gas generated by the thermal decomposition of the molten resin in the cylinder 12 is discharged from the gas discharge unit 17 and the gas discharge unit 32, or is supplied into the cylinder 22 from the tip of the cylinder 12 through the connection unit 31.

In addition, in the cylinder 22, the kneading section 62 is located on the downstream side relative to the connection position of the hopper 25 and on the upstream side relative to the connection position of the connection unit 31. In the kneading section 62 of the cylinder 22, the molten resin formed by plasticizing the resin material 52 fills the conveyance space in the cylinder 22 (the space in which the resin material is conveyed by the screw 23). Therefore, the monomer gas supplied from the tip of the cylinder 12 through the connection unit 31 into the cylinder 22 cannot return to the upstream side relative to the kneading section 62 by passing through the kneading section 62 in the cylinder 22. In addition, the kneaded resin mixture (molten resin) formed in the cylinder 22 is extruded from a hole (resin discharge port) of the die 26, and the hole of the die 26 and the resin flow path in front of the hole are filled with the kneaded resin mixture (molten resin). Therefore, the monomer gas supplied into the cylinder 22 through the connection unit 31 from the tip of the cylinder 12 cannot pass through the hole of the die 26 and the resin flow path, and thus is not discharged to the outside through the hole of the die 26. Accordingly, the monomer gas supplied into the cylinder 22 from the tip of the cylinder 12 through the connection unit 31 is discharged to the outside of the cylinder 22 from the gas discharge unit 27, so that it is possible to prevent the monomer gas from being discharged to the outside from the hopper 25 and the die 26.

In addition, generation of monomer gas by the thermal decomposition of the molten resin is suppressed or prevented in the cylinder 22, but even if monomer gas is generated in the cylinder 22 by the thermal decomposition of the molten resin, the monomer gas cannot return to the upstream side relative to the kneading section 62 by passing through the kneading section 62 in the cylinder 22, and cannot pass through the hole of the die 26 and the resin flow path. Therefore, the monomer gas is discharged from the gas discharge unit 27 to the outside of the cylinder **22.**

As a result, the whole amount of monomer gas generated by the thermal decomposition of the resin material 51 in the cylinder 12 can be sent from the gas discharge units 17, 27, and 32 through the gas pipe 46 to the heat exchanger 44 and liquefied, and can be stored and recovered in the recovery container 45. Therefore, it is possible to prevent the monomer gas generated by the thermal decomposition in the cylinder 12 from diffusing to the surroundings. Further, even if monomer gas is generated by the thermal decomposition in the cylinder 22, the whole amount of the monomer gas can be sent from the gas discharge unit 27 through the gas pipe 46 to the heat exchanger 44 and liquefied, and can be stored and recovered in the recovery container 45. Therefore, even if monomer gas is generated by the thermal decomposition in the cylinder 22, it is possible to prevent the monomer gas from diffusing to the surroundings.

### <Modifications>

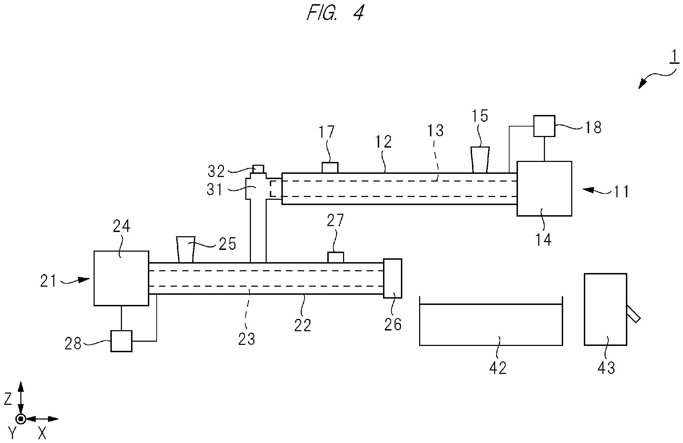

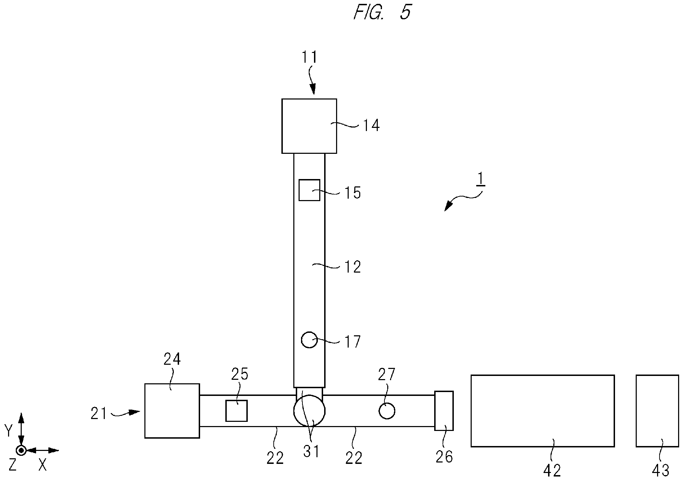

Modifications of the present embodiment will be described. FIG. 4 is an explanatory diagram (side view) illustrating a first modification of the resin processing apparatus 1 according to the present embodiment. FIG. 5 is an explanatory diagram (plan view) illustrating a second modification of the resin processing apparatus 1 according to the present embodiment. For the sake of simplification, illustrations of the control units 18 and 28 are omitted in FIG. 4, and illustrations of the screws 13 and 23 in the cylinders 12 and 22 and the control units 18 and 28 are omitted in FIG. 5. Further, for ease of understanding, the cooling bath 42 and the cutting apparatus 43 are also illustrated in FIG. 4 and FIG. 5.

In FIG. 1, FIG. 4, and FIG. 5 and FIG. 6 and FIG. 7 described later, two directions out of the X direction, the Y direction, and the Z direction are illustrated, and the X direction, the Y direction, and the Z direction are directions that are perpendicular to each other. Of these, the X and Y directions are horizontal directions, and the Z direction is a height direction.

In the case of FIG. 1 above and the case of FIG. 4 (first modification), the long axis direction of the cylinder 12 and the long axis direction of the cylinder 22 are the same, and are the X direction here. However, the conveying direction of the resin material in the cylinder 12 and the conveying direction of the resin material in the cylinder 22 are the same in the case of FIG. 1, whereas the conveying direction of the resin material in the cylinder 12 and the conveying direction of the resin material in the cylinder 22 are opposite to each other in the case of FIG. 4 (first modification).

Namely, in the case of FIG. 1, the direction from the upstream side to the downstream side of the cylinder 12 and the direction from the upstream side to the downstream side of the cylinder 22 are the same. Specifically, in the case of FIG. 1, the resin material is conveyed from the left side of the drawing to the right side of the drawing in both the cylinder 12 and the cylinder 22. On the other hand, in the case of FIG. 4 (first modification), the direction from the upstream side to the downstream side of the cylinder 12 and the direction from the upstream side to the downstream side of the cylinder 22 are opposite to each other. Specifically, in the case of FIG. 4 (first modification), the resin material is conveyed from the right side of the drawing to the left side of the drawing in the cylinder 12, and the resin material is conveyed from the left side of the drawing to the right side of the drawing in the cylinder 22.

In the case of FIG. 5 (second modification), the long axis direction of the cylinder 12 and the long axis direction of the cylinder 22 are directions that intersect with each other, for example, directions that are perpendicular to each other, and the long axis direction of the cylinder 12 is the Y direction and the long axis direction of the cylinder 22 is the X direction here.

Note that the long axis direction of the cylinder 12 refers to the long side direction or longitudinal direction of the cylinder 12, and the cylindrical cylinder 12 extends in the long axis direction of the cylinder 12. The long axis direction of the cylinder 12 and the long axis direction of the screw 13 in the cylinder 12 are the same, and the long axis direction of the screw 13 corresponds to the axial direction of a rotating shaft of the screw 13. In the cylinder 12, the resin material is conveyed in the long axis direction from the upstream side to the downstream side by the rotating screw 13.

Further, the long axis direction of the cylinder 22 refers to the long side direction or longitudinal direction of the cylinder 22, and the cylindrical cylinder 22 extends in the long axis direction of the cylinder 22. The long axis direction of the cylinder 22 and the long axis direction of the screw 23 in the cylinder 22 are the same, and the long axis direction of the screw 23 corresponds to the axial direction of a rotating shaft of the screw 23. In the cylinder 22, the resin material is conveyed in the long axis direction from the upstream side to the downstream side by the rotating screw 23.

The advantages and others of each of the case illustrated in FIG. 1, the case illustrated in FIG. 4 (first modification), and the case illustrated in FIG. 5 (second modification) will be described below.

In the case of FIG. 1, the dimension of the entire resin processing apparatus 1 in the Y direction can be reduced as compared with the case of FIG. 5 (second modification). Therefore, in the case of FIG. 1, the dimension of the planar area required to install the resin processing apparatus 1, the cooling bath 42, and the cutting apparatus 43 in the Y direction can be reduced as compared with the case of FIG. 5 (second modification).

In the case of FIG. 4 (first modification), the dimension of the entire resin processing apparatus 1 in the Y direction can be reduced as compared with the case of FIG. 5 (second modification). Also, in the case of FIG. 4 (first modification), the dimension of the entire resin processing apparatus 1 in the X direction can be reduced as compared with the case of FIG. 1 above. Therefore, in the case of FIG. 4 (first modification), the dimension of the planar area required to install the resin processing apparatus 1, the cooling bath 42, and the cutting apparatus 43 in the Y direction can be reduced as compared with the case of FIG. 5 (second modification), and the dimension of the planar area required to install the resin processing apparatus 1, the cooling bath 42, and the cutting apparatus 43 in the X direction can be reduced as compared with the case of FIG. 1 above.

In the case of FIG. 5 (second modification), since the hopper 25 for supplying the resin material 52 into the cylinder 22 does not overlap with the cylinder 12 in plan view, the cylinder 12 does not get in the way when feeding the resin material 52 to the hopper 25. This makes it easier to feed the resin material 52 to the hopper 25. Also, in the case of FIG. 5 (second modification), when the cooling bath 42 and the cutting apparatus 43 are arranged at the position adjacent to the extruder 21 in the X direction, the extruder 11 does not get in the way. This makes it easier to arrange the resin processing apparatus 1, the cooling bath 42, and the cutting apparatus 43.

Further, in the case of FIG. 1, if the difference in height between the cylinder 12 and the cylinder 22 is small, it becomes difficult to feed the resin material 52 to the hopper 25, and it is thus necessary to ensure a certain degree of difference in height between the cylinder 12 and the cylinder 22. In contrast, in the case of FIG. 5 (second modification), even if the difference in height between the cylinder 12 and the cylinder 22 is small, the cylinder 12 does not get in the way when feeding the resin material 52 to the hopper 25. Therefore, in the case of FIG. 5 (second modification), it is possible to make the difference in height between the cylinder 12 and the cylinder 22 smaller as compared with the case of FIG. 1.

In addition, in the case of FIG. 4 (first modification), when the cooling bath 42 and the cutting apparatus 43 are to be arranged at the position adjacent to the extruder 21 in the X direction, there is a possibility that the cooling bath 42 and the cutting apparatus 43 overlap with the cylinder 12 in plan view, and it is thus necessary to increase the difference in height between the cylinder 12 and the cylinder 22 such that the cylinder 12 does not get in the way. Therefore, from the viewpoint of being able to reduce the difference in height between the cylinder 12 and the cylinder 22, the case of FIG. 1 is more advantageous than the case of FIG. 4 (first modification), and the case of FIG. 5 (second modification) is even more advantageous.

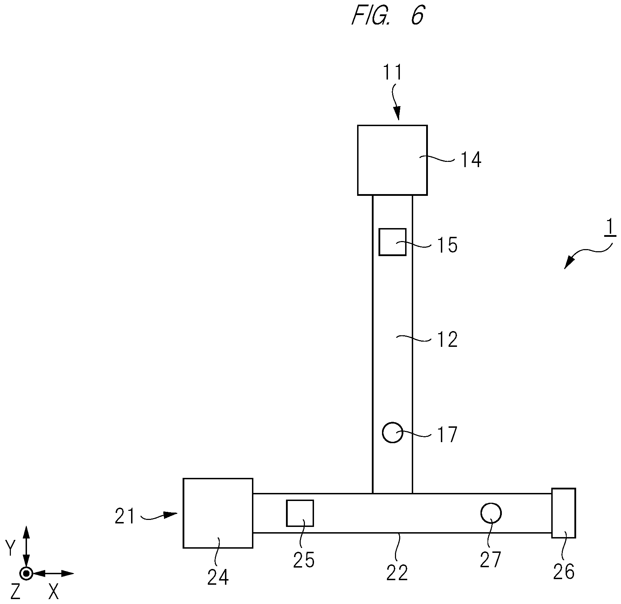

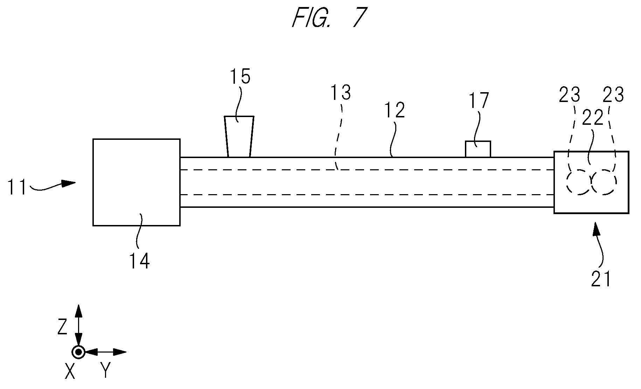

FIG. 6 and FIG. 7 are explanatory diagrams illustrating a third modification of the resin processing apparatus 1 according to the present embodiment.

In the cases of FIG. 1, FIG. 4 (first modification), and FIG. 5 (second modification) above, the height position of the cylinder 12 is higher than the height position of the cylinder 22, the cylinder 12 is connected to the cylinder 22 via the connection unit 31, and the material extruded from the cylinder 12 is supplied into the cylinder 22 through the connection unit 31.

In contrast, in the case of the third studied example illustrated in FIG. 6 and FIG. 7, the height position of the cylinder 12 is approximately the same as the height position of the cylinder 22, the cylinder 12 is directly connected to the cylinder 22 without going through anything equivalent to the above-mentioned connection unit 31, and the material extruded from the tip of the cylinder 12 is directly supplied into the cylinder 22.

Specifically, in the case of the third studied example illustrated in FIG. 6 and FIG. 7, the long axis direction of the cylinder 12 and the long axis direction of the cylinder 22 are directions that intersect with each other, and preferably are perpendicular to each other, and the long axis direction of the cylinder 12 is the Y direction and the long axis direction of the cylinder 22 is the X direction here. The height position of the cylinder 12 is approximately the same as the height position of the cylinder 22, and the tip of the cylinder 12 faces the side surface of the cylinder 22 and is connected to the side surface. The cylinder 22 has an opening (opening for the cylinder 12) at the position where the cylinder 12 is connected, and the cylinder 12 is connected so as to communicate with the opening. In this way, the material extruded from the tip of the cylinder 12 is supplied into the cylinder 22 through the opening of the cylinder 22 (opening for the cylinder 12).

In the case of the resin processing apparatus 1 according to the third studied example illustrated in FIG. 6 and FIG. 7 as well, substantially the same effects as those in the case of the resin processing apparatus 1 illustrated in FIG. 1 above can be obtained. In addition, in the case of the resin processing apparatus 1 according to the third studied example illustrated in FIG. 6 and FIG. 7, since the height position of the cylinder 12 and the height position of the cylinder 22 are approximately the same, the height positions of the extruders 11 and 21 constituting the resin processing apparatus 1 can be made the same as each other. Therefore, the extruders 11 and 21 constituting the resin processing apparatus 1 can be easily arranged (installed). On the other hand, in the case of the resin processing apparatus 1 illustrated in FIG. 1 above, since the cylinder 12 is connected to the cylinder 22 via the connection unit 31, the cylinder 12 can be easily connected to the cylinder 22 and also the relative positional relationship between the cylinder 12 and the cylinder 22 can be easily adjusted.

In addition, in any of the cases of FIG. 1, FIG. 4 (first modification), FIG. 5 (second modification), and FIG. 6 (third studied example), it is preferable that the length (length in the long axis direction) of the cylinder 12 is longer than the length (length in the long axis direction) of the cylinder 22. It is desirable to sufficiently thermally decompose the resin material 51 in the cylinder 12 to increase the amount of generated monomer gas, and it is desirable for this purpose that the length of the cylinder 12 is long to some extent. On the other hand, it is only necessary in the cylinder 22 that the resin material 52 supplied from the hopper 25 into the cylinder 22 and the material supplied from the cylinder 12 into the cylinder 22 can be kneaded to an extent that does not cause any problems in the formation of the strand 53. Therefore, the length of the cylinder 12 does not need to be very long. Accordingly, the amount of monomer gas generated in the cylinder 12 can be increased by increasing the length of the cylinder 12, and the overall dimensions of the resin processing apparatus 1 can be reduced by making the length of the cylinder 22 shorter than the length of the cylinder 12.

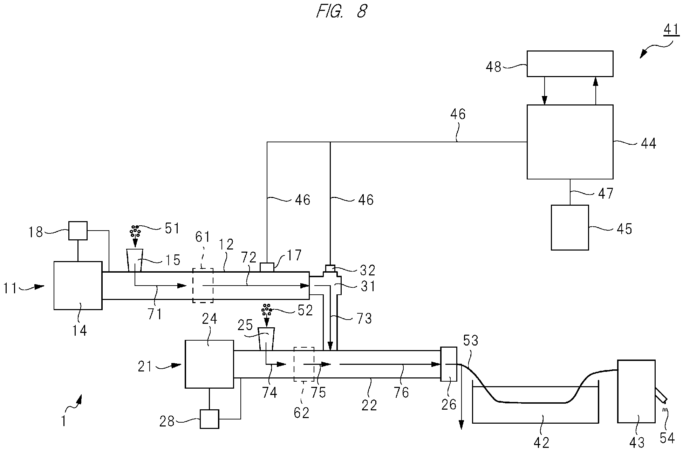

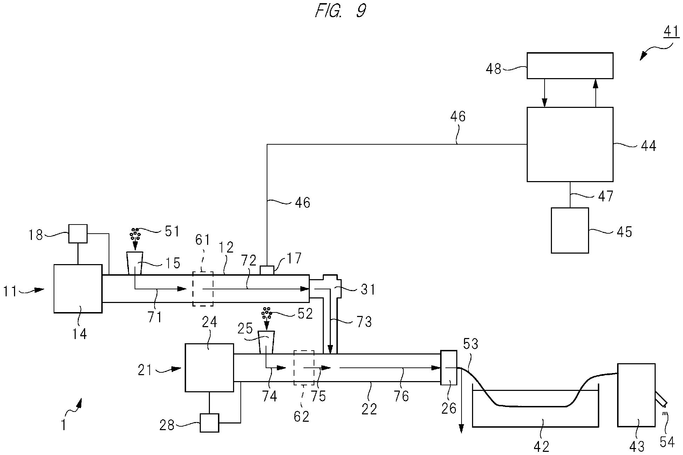

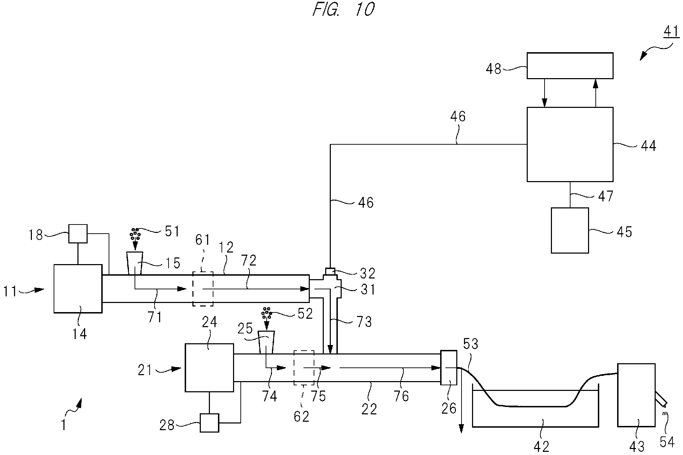

FIG. 8 is an explanatory diagram illustrating a fourth modification of the resin processing apparatus 1 according to the present embodiment and the pellet manufacturing system 41 using the same. FIG. 9 is an explanatory diagram illustrating a fifth modification of the resin processing apparatus 1 according to the present embodiment and the pellet manufacturing system 41 using the same. FIG. 10 is an explanatory diagram illustrating a sixth modification of the resin processing apparatus 1 according to the present embodiment and the pellet manufacturing system 41 using the same. FIG. 8 to FIG. 10 each correspond to FIG. 2 above.

In the case of FIG. 8 (fourth modification), the gas discharge unit 27 is not provided on the cylinder 22 of the extruder 21, and thus the gas pipe 46 connected to the gas discharge unit 27 is not provided either. In the case of FIG. 9 (fifth modification), the gas discharge unit 27 is not provided on the cylinder 22 of the extruder 21 and the gas discharge unit 32 is not provided on the connection unit 31, and thus the gas pipe 46 connected to the gas discharge unit 27 and the gas pipe 46 connected to the gas discharge unit 32 are not provided either. In the case of FIG. 10 (sixth modification), the gas discharge unit 27 is not provided on the cylinder 22 of the extruder 21 and the gas discharge unit 17 is not provided on the cylinder 12 of the extruder 11, and thus the gas pipe 46 connected to the gas discharge unit 17 and the gas pipe 46 connected to the gas discharge unit 27 are not provided either. Other than those described above, the case of FIG. 8 (fourth modification), the case of FIG. 9 (fifth modification), and the case of FIG. 10 (sixth modification) have the same configurations as those of the resin processing apparatus 1 in FIG. 2 and the pellet manufacturing system 41 using the same described above.

When the cases of FIG. 2, FIG. 8 (fourth modification), FIG. 9 (fifth modification), and FIG. 10 (sixth modification) are compared, it is the case of FIG. 2 that can most easily increase the recovery efficiency of the monomer gas generated in the resin processing apparatus 1. In the case of FIG. 2, monomer gas generated in the resin processing apparatus 1 can be recovered from the gas discharge unit 17 provided on the cylinder 12 of the extruder 11, the gas discharge unit 32 provided on the connection unit 31, and the gas discharge unit 27 provided on the cylinder 22 of the extruder 21.

In addition, the recovery efficiency of the monomer gas generated in the resin processing apparatus 1 can be more easily increased in the case of FIG. 8 (fourth modification) as compared with the cases of FIG. 9 (fifth modification) and FIG. 10 (sixth modification). This is because the monomer gas generated in the resin processing apparatus 1 can be recovered from both the gas discharge unit 17 provided on the cylinder 12 of the extruder 11 and the gas discharge unit 32 provided on the connection unit 31 in the case of FIG. 8 (fourth modification). Further, in the case of FIG. 8 (fourth modification), there is no need to provide the gas discharge unit 27 on the cylinder 22 of the extruder 21, and thus there is no need to provide the gas pipe 46 connected to the gas discharge unit 27, so that the configuration of the resin processing apparatus 1 and the pellet manufacturing system 41 using the same can be simplified as compared with the case of FIG. 2.

Also, in the case of FIG. 9 (fifth modification), the monomer gas generated in the resin processing apparatus 1 can be recovered from the gas discharge unit 17 provided on the cylinder 12 of the extruder 11. Further, in the case of FIG. 10 (sixth modification), the monomer gas generated in the resin processing apparatus 1 can be recovered from the gas discharge unit 32 provided on the connection unit 31. In the case of FIG. 9 (fifth modification) and the case of FIG. 10 (sixth modification), the configuration of the resin processing apparatus 1 and the pellet manufacturing system 41 using the same can be further simplified as compared with the case of FIG. 8 (fourth modification).

In the foregoing, the invention made by the inventor of the present invention has been specifically described above based on the embodiment thereof, but it goes without saying that the present invention is not limited to the above embodiment, and various modifications can be made within the range not departing from the gist thereof.

### REFERENCE SIGNS LIST

1 resin processing apparatus
11, 21 extruder
12, 22 cylinder
13, 23 screw
14, 24 rotation drive mechanism
15, 25 hopper
26 die
17, 27 gas discharge unit
18, 28 control unit
31 connection unit
32 gas discharge unit
41 pellet manufacturing system
42 cooling bath
43 cutting apparatus
44 heat exchanger
45 recovery container
46 gas pipe
47 pipe
48 cooling water
51, 52 resin material
53 strand
54 resin pellet
61, 62 kneading section
101 processing system
111 extruder
112 cylinder
114 rotation drive mechanism
115 hopper
117, 119 gas discharge unit
118 tank
144 heat exchanger
145 recovery container
146 gas pipe
147 pipe
148 cooling water
151 resin material

## Claims

1. A resin processing apparatus comprising:
a first extruder to which a first resin material is supplied; and
a second extruder to which the first extruder is connected and a residual resin discharged from the first extruder is supplied,
wherein a temperature of a cylinder of the first extruder on a downstream side relative to a first kneading section is set to be higher than a thermal decomposition temperature of the first resin material, and
wherein a temperature of a cylinder of the second extruder on a downstream side relative to a position where the residual resin is supplied is set to be lower than a thermal decomposition temperature of the residual resin.

2. The resin processing apparatus according to claim 1,
wherein the first resin material is plasticized in the first kneading section of the cylinder of the first extruder.

3. The resin processing apparatus according to claim 1,
wherein the first extruder includes:
a first supply unit configured to supply the first resin material into the cylinder of the first extruder; and
a first gas discharge unit provided on the cylinder of the first extruder and configured to discharge gas generated in the cylinder of the first extruder, and
wherein the first kneading section is located on a downstream side relative to the first supply unit in the cylinder of the first extruder and on an upstream side relative to the first gas discharge unit.

4. The resin processing apparatus according to claim 1,
wherein the cylinder of the first extruder and the cylinder of the second extruder are connected via a connection unit, and
wherein the residual resin discharged from a tip of the cylinder of the first extruder is supplied into the cylinder of the second extruder through the connection unit.

5. The resin processing apparatus according to claim 4,
wherein a second gas discharge unit configured to discharge gas generated in the cylinder of the first extruder is provided on the connection unit.

6. The resin processing apparatus according to claim 1,
wherein the second extruder includes a second supply unit configured to supply a second resin material into the cylinder of the second extruder, and
wherein the second supply unit is located on an upstream side relative to the position where the residual resin is supplied into the cylinder of the second extruder.

7. The resin processing apparatus according to claim 6,
wherein the temperature of the cylinder of the second extruder on a downstream side relative to the position where the residual resin is supplied is set to be lower than a thermal decomposition temperature of the second resin material.

8. The resin processing apparatus according to claim 7,
wherein the temperature of the cylinder of the second extruder on the downstream side relative to the position where the residual resin is supplied is set to be higher than a liquefaction temperature of monomer gas generated in the cylinder of the first extruder.

9. The resin processing apparatus according to claim 6,
wherein the second extruder includes a second gas discharge unit configured to discharge gas flowing into the cylinder of the second extruder from the cylinder of the first extruder, and
wherein the second gas discharge unit is located on the downstream side relative to the position where the residual resin is supplied into the cylinder of the second extruder.

10. The resin processing apparatus according to claim 1,
wherein a long axis direction of the cylinder of the first extruder and a long axis direction of the cylinder of the second extruder are the same.

11. The resin processing apparatus according to claim 1,
wherein a long axis direction of the cylinder of the first extruder and a long axis direction of the cylinder of the second extruder are perpendicular to each other.

12. The resin processing apparatus according to claim 1,
wherein a length of the cylinder of the first extruder is longer than a length of the cylinder of the second extruder.

13. A method of manufacturing resin pellets comprising:
(a) a step of supplying a first resin material into a cylinder of a first extruder;
(b) after the step (a), a step of supplying a residual resin discharged from the cylinder of the first extruder into a cylinder of a second extruder to which the cylinder of the first extruder is connected; and
(c) after the step (b), a step of cutting a material extruded from the second extruder to form resin pellets,
wherein a temperature of the cylinder of the first extruder on a downstream side relative to a first kneading section is set to be higher than a thermal decomposition temperature of the first resin material, and
wherein a temperature of the cylinder of the second extruder on a downstream side relative to a position where the residual resin is supplied is set to be lower than a thermal decomposition temperature of the residual resin.

14. The method of manufacturing the resin pellets according to claim 13, the method further comprising:
(a1) after the step (a) and before the step (b), a step of conveying and melting the first resin material in the cylinder of the first extruder,
wherein, in the step (a1), the first resin material is plasticized in the first kneading section of the cylinder of the first extruder.

15. The method of manufacturing the resin pellets according to claim 14,
wherein the temperature of the cylinder of the second extruder on the downstream side relative to the position where the residual resin is supplied is set to be higher than a liquefaction temperature of monomer gas generated in the cylinder of the first extruder.

16. The method of manufacturing the resin pellets according to claim 14, the method further comprising:
(d) a step of supplying a second resin material into the cylinder of the second extruder; and
(e) after the step (b) and the step (d), a step of kneading the second resin material and the residual resin supplied from the cylinder of the first extruder to form a kneaded resin mixture in the cylinder of the second extruder,
wherein, in the step (c), the kneaded resin mixture is extruded as the material from the second extruder.

17. The method of manufacturing the resin pellets according to claim 16,
wherein the temperature of the cylinder of the second extruder on the downstream side relative to the position where the residual resin is supplied is set to be lower than a thermal decomposition temperature of the second resin material.

18. The method of manufacturing the resin pellets according to claim 14,
wherein monomer gas discharged from the first extruder is liquefied by a heat exchanger.

19. The method of manufacturing the resin pellets according to claim 14,
wherein the first resin material is made of a waste plastic.

20. A method of processing a resin material comprising:
(a) a step of supplying a first resin material into a cylinder of a first extruder;
(b) after the step (a), a step of supplying a residual resin discharged from the cylinder of the first extruder into a cylinder of a second extruder to which the cylinder of the first extruder is connected;
(c) after the step (b), a step of extruding a material containing the residual resin from the second extruder; and
(d) a step of liquefying monomer gas discharged from the first extruder by a heat exchanger,
wherein a temperature of the cylinder of the first extruder on a downstream side relative to a first kneading section is set to be higher than a thermal decomposition temperature of the first resin material, and
wherein a temperature of the cylinder of the second extruder on a downstream side relative to a position where the residual resin is supplied is set to be lower than a thermal decomposition temperature of the residual resin.

21. The method of processing the resin material according to claim 20, the method further comprising:
(a1) after the step (a) and before the step (b), a step of conveying and melting the first resin material in the cylinder of the first extruder,
wherein, in the step (a1), the first resin material is plasticized in the first kneading section of the cylinder of the first extruder.

22. The method of processing the resin material according to claim 21,
wherein the temperature of the cylinder of the second extruder on the downstream side relative to the position where the residual resin is supplied is set to be higher than a liquefaction temperature of the monomer gas generated in the cylinder of the first extruder.

23. The method of processing the resin material according to claim 21, the method further comprising:
(d) a step of supplying a second resin material into the cylinder of the second extruder; and
(e) after the step (b) and the step (d), a step of kneading the second resin material and the residual resin supplied from the cylinder of the first extruder to form a kneaded resin mixture in the cylinder of the second extruder,
wherein, in the step (c), the kneaded resin mixture is extruded as the material from the second extruder.

24. The method of processing the resin material according to claim 23,
wherein the temperature of the cylinder of the second extruder on the downstream side relative to the position where the residual resin is supplied is set to be lower than a thermal decomposition temperature of the second resin material.

25. The method of processing the resin material according to claim 21,
wherein the first resin material is made of a waste plastic.
